# EUROPÄISCHE PATENTSCHRIFT

(11) **EP 1 476 645 B1**
(45) Veröffentlichungstag und Bekanntmachung des Hinweises auf die Patenterteilung: **07.06.2006**
(21) Anmeldenummer: 03742501.4
(22) Anmeldetag: 24.01.2003
(51) Int. Cl.: F01P 5/10, F01P 7/16, F16K 31/04, F04D 15/00, F04D 13/06

(54) **ELEKTRISCHE KÜHLMITTELPUMPE MIT INTEGRIERTEM VENTIL SOWIE VERFAHREN ZU DESSEN STEUERUNG**
ELECTRIC COOLANT PUMP HAVING AN INTEGRATED VALVE, AND METHOD FOR CONTROLLING SAID VALVE
POMPE ELECTRIQUE DE FLUIDE REFRIGERANT A SOUPAPE INTEGREE ET PROCEDE DE COMMANDE DE LADITE SOUPAPE

(30) Priorität: 22.02.2002 DE 10207653
(43) Veröffentlichungstag der Anmeldung: 17.11.2004
(73) Patentinhaber: GPM Geräte- und Pumpenbau GmbH, 98673 Merbelsrod (Thür.) (DE)
(72) Erfinder: PAWELLEK, Franz, 96486 Lautertal (DE); SCHMIDT, Andreas, 98673 Schwarzbach (DE)
(74) Vertreter: Kuhnen & Wacker
(86) Internationale Anmeldenummer: PCT/EP2003/000740
(87) Internationale Veröffentlichungsnummer: WO 2003/071109

(56) Entgegenhaltungen:
- EP-A- 0 434 634
- DE-A- 19 921 421
- PATENT ABSTRACTS OF JAPAN vol. 013, no. 506 (M-892), 14. November 1989 (1989-11-14) & JP 01 203696 A (MATSUSHITA ELECTRIC IND CO LTD), 16. August 1989 (1989-08-16)

## Beschreibung

Die vorliegende Erfindung betrifft eine elektrische Kühlmittelpumpe, insbesondere für den Kühlmittelkreislauf von Kraftfahrzeugverbrennungsmotoren, nach dem Oberbegriff des Anspruchs 1, sowie ein Verfahren zur Steuerung eines Ventils einer elektrischen Kühlmittelpumpe, nach dem Oberbegriff des Anspruch 13.

Aus der Praxis sind verschiedene Ausführungsformen von Pumpen für Kühl- oder Heizkreisläufe in Kraftfahrzeugen bekannt geworden.

So ist beispielsweise in der EP 0 712 744 A1 im Zusammenhang mit der dort beschriebenen Fahrzeugheizung mit einem Latentwärmespeicher allgemein eine zur Förderung des Kühlmittels geeignete Umwälzpumpe diskutiert. Weiterhin ist in der DE 198 03 884 A1 eine flüssigkeitsgekühlte Brennkraftmaschine mit einem Kühlkreislauf mit einer hierfür geeigneten Kühlmittelpumpe beschrieben.

Elektrisch angetriebene Kühlmittelpumpen werden zunehmend als Antriebselement für den Kühlkreislauf eines Kraftfahrzeugverbrennungsmotors genutzt. Diese haben gegenüber einer an die Motordrehzahl gekoppelten Pumpe herkömmlicher Bauart den Vorteil, daß sie unabhängig von der Motordrehzahl sind und somit auch beispielsweise im Stillstand Kühlwasser fördern können. Eine besonders leistungsfähige und zugleich extrem kompakte als auch leichte Bauart einer elektrischen Kühlmittelpumpe ist von derselben Anmelderin erfolgreich entwickelt worden. Diese ist in der noch nicht veröffentlichten Patentanmeldung DE 100 47 387.3 diskutiert.

Des weiteren ist beispielsweise aus der DE 199 21421 A1 eine elektrisch betriebene Kühlmittelpumpe für einen Kühl- oder Heizkreislauf in einem Kraftfahrzeug bekannt geworden. Bei dieser Kühlmittelpumpe ist zur weiteren Reduzierung des Bauraums das Ventil mit dessen Gehäuse am Gehäuse der Pumpe mit angeordnet. Nachteilig hierbei ist jedoch, daß das Ventil der DE 199 21421 A1 über einen separaten Antrieb, der hier speziell als Verstellmotor ausgebildet ist, geschaltet wird und zudem eine eigene Steuereinheit benötigt. Weiterhin ist bei dieser Bauform nachteilig, daß das über das Kühlmittel auf dem Weg von der Zuleitung über das Ventil zur Kühlmittelpumpe teilweise um mehr als 90° umgelenkt wird, was extrem hohe Strömungsverluste verursacht. Zuletzt muß bei dieser Bauart das Ventil in strömungsbelastetem Zustand von dem separaten Antrieb geschaltet werden, so daß in nachteiliger Weise hohe Schalt- bzw. Stellkräfte erforderlich sind.

Demgegenüber ist es zur Vermeidung der vorstehend diskutierten Nachteile Aufgabe der vorliegenden Erfindung, eine elektrische Kühlmittelpumpe mit einem im Pumpenzulauf integrierten Ventil, insbesondere eine in einem gemeinsamen Gehäuse vereinte Kombination aus Pumpe und Ventil, vorzuschlagen, die möglichst kompakt baut, ein geringes Gewicht aufweist, und steuerungstechnisch vereinfacht ist. Weiterhin ist es Aufgabe der vorliegenden Erfindung, ein vereinfachtes Verfahren zur Steuerung des Ventils vorzuschlagen.

Diese Aufgabe wird in vorrichtungstechnischer Hinsicht gelöst durch die kennzeichnenden Merkmale des Anspruchs 1. In verfahrenstechnischer Hinsicht wird diese Aufgabe gelöst, durch die kennzeichnenden Merkmale des Anspruchs 13.

Hierbei wird erfindungsgemäß erstmals eine elektrische Kühlmittelpumpe, insbesondere für den Kühlmittelkreislauf von Kraftfahrzeugverbrennungsmotoren, mit einem Kühlmittelpumpenmotor, der über eine Pumpenwelle ein Pumpenlaufrad antreibt, und mit einem im Pumpenzulauf integrierten Ventil, vorgeschlagen, wobei erstmals der Kühlmittelpumpenmotor das Schaltelement für das Ventil ist.

Mit anderen Worten: Die erforderliche Schaltarbeit wird vom Kühlmittelpumpenmotor geleistet und von der Welle des Kühlmittelpumpenmotors auf das Ventil übertragen. Damit wird in vorteilhafter Weise das Ventil erstmals durch den Kühlmittelpumpenmotor mittels dessen Welle schaltbar, was eine wesentliche Reduzierung der zu verbauenden Komponenten als auch eine entscheidende Platzersparnis sowie eine überraschende steuerungstechnische Vereinfachung ermöglicht. Zugleich wird eine entscheidende Gewichtsreduzierung erreicht. Nicht zuletzt bietet diese neue Kombination aus Kühlmittelpumpe und Ventil die Möglichkeit, die Steuerelektronik der Pumpe gleichzeitig für die Steuerung des Ventils zu nutzen, so daß auch auf eine separate Steuerung des Ventils verzichtet werden kann.

In vorteilhafter Weise kann dabei durch die Verwendung von elektrischen Kühlmittelpumpen in sogenannten Thermomanagement-Systemen das herkömmliche Thermostatventil abgelöst und durch elektrisch betätigte Ventile ersetzt werden, wobei die vorliegende Erfindung hierfür erstmals den Elektromotor der Pumpe als Schaltelement vorsieht. Das so betätigte Ventil ermöglicht eine höhere Regeldynamik bei verringerten Durchström-Druckverlusten

Zwar sind in der Praxis verschiedene Lösungen für einen separaten elektrischen Antrieb des Ventils vorgeschlagen worden, bei denen in der Regel ein Drehschieber- oder Ringschieber über einen Elektromotor mit Getriebeunterstützung angesteuert wird. Diese elektrisch separat betätigten Ventilelemente stellen jedoch einen erheblichen Kostenfaktor innerhalb des Kühlsystems dar und sind steuerungstechnisch aufwendig gehalten. Neben einem eigenen Stellantrieb und einer Verbindungsleitung zur elektrischen Kühlmittelpumpe zum Datenabgleich benötigen sie eine eigene Stromversorgung, eine eigene Steuerungseinheit sowie den Anschluß an ein Datenbussystem.

Demgegenüber bietet die erfindungsgemäße Kombination aus Kühlmittelpumpe mit integriertem Ventil den kompaktestmöglichen Aufbau. Hier wird erstmals in vorteilhafter Weise der Antriebsmotor der Pumpe mit einer zusätzlichen Funktion, nämlich der Funktion: "Ventilbetätigung" belegt. Der bauliche Aufwand an Gehäusebauteilen, Elektronik, Antrieb, etc. wird durch die Doppelfunktion des Kühlmittelpumpenmotors, der sowohl a) als Pumpenantrieb und b) zur Ventilbetätigung genutzt wird, auf ein geringstmögliches Minimum zurückgeführt.

Darüber hinaus ist ein Drehschieberelement mit der Pumpenwelle über einen Freilauf verbunden. Der Freilauf verhindert bei Drehung des Kühlmittelpumpenmotors in Vorwärtslaufrichtung eine Kraftübertragung auf das Drehschieberelement. Dieses kann damit in seiner aktuellen Schaltstellung verharren, während sich die Pumpenwelle mit dem Pumpenlaufrad entsprechend der angeforderten Drehzahl dreht. Weiterhin läßt dieser Freilauf eine Kraftübertragung auf das Drehschieberelement nur in Rücklaufdrehrichtung des Kühlmittelpumpenmotors zu. Damit wird vorteilhaft die Rotationsbewegung des Kühlmittelpumpenmotors, der erfindungsgemäß als Schaltelement für das Ventil dient, zur Bereitstellung der Schaltbewegung ausnutzen. Somit kann auf ein Getriebe oder andere Umlenkmechanismen zur Kraftübertragung verzichtet werden, was wiederum eine vorteilhafte Reduzierung der Bauteile zur Folge hat.

Vorteilhafte Weiterbildungen der Erfindung ergeben sich aus den Merkmalen der Unteransprüche.

So kann das Ventil in vorteilhafter Weise als 3/2-Wege-Ventil ausgebildet sein. Damit wird eine möglichst kompakte Bauform erreicht, wobei die beiden Zuläufe des Ventils durch die Kühlmittelströme vom Bypass bzw. vom Kühler belegt werden und der einzige Ablauf des Ventils direkt durch das Pumpengehäuse hindurch, das Pumpenlaufrad und den Pumpenmotor umströmend, weg geführt wird. Eine kompaktere Bauform ist mit den heute gegebenen technischen Möglichkeiten kaum zu realisieren.

Das als 3/2-Wege-Ventil ausgebildete Ventil ersetzt bei der erfindungsgemäßen Kombination aus Kühlmittelpumpe mit integriertem Ventil das bekannte herkömmliche Thermostatventil. Es weist die beiden Schaltstellungen a) "Kühler offen" oder b) "Bypass offen" auf. Es verbessert das dynamische Regelverhalten und mindert den Druckverlust gegenüber Thermostatventilen wesentlich. Die direkte räumliche Zuordnung des 3/2-Wege-Ventil zur elektrischen Pumpe schafft mit der besonders kompakten Bauform dieser Kombination erhebliche Einbauvorteile bei der Anordnung in einem Kraftfahrzeug-Kühlsystem. Der Elektromotor der Pumpe treibt bei der erfindungsgemäßen Kombination erstmalig in der einen Drehrichtung das Pumpenlaufrad an, in der anderen betätigt er, vorzugsweise über die Pumpenwelle und einen Freilauf, das Ventil.

In einer bevorzugten Ausführungsform weist das Ventil als Ventilelement eine flache Scheibe auf. Eine solche Ventilscheibe oder ein Drehschieberelement bieten den Vorteil einer platzsparenden Bauweise verbunden mit hoher Funktionssicherheit. Ferner ist eine Ventilscheibe oder eine Drehschieberelement besonders einfach zu lagern und abzudichten.

Gemäß einer weiter bevorzugten Ausführungsform weist das Drehschieberelement zwei Stellungen auf, die vorzugsweise als Raststellungen ausgebildet sind. Die beiden Schaltstellungen sind a) "Kühler offen" und b) "Bypass offen". Das Drehschieberelement kann beispielsweise vermittels einer angeformten, federnden Nase in eine entsprechende Ausnehmung im das Drehschieberelement umfassenden Gehäuse einrasten, so daß in vorteilhafter Weise das Einhalten vordefinierter Schaltstellungen konstruktiv einfach sichergestellt ist.

Entsprechend einer weiter bevorzugten Ausführungsform ist das Drehschieberelement mit der Pumpenwelle über einen Freilauf verbunden. Der Freilauf verhindert bei Drehung des Kühlmittelpumpenmotors in Vorwärtslaufrichtung eine Kraftübertragung auf das Drehschieberelement. Dieses kann damit in seiner aktuellen Schaltstellung verharren, während sich die Pumpenwelle mit dem Pumpenlaufrad entsprechend der angeforderten Drehzahl dreht. Weiterhin läßt dieser Freilauf eine Kraftübertragung auf das Drehschieberelement nur in Rücklaufdrehrichtung des Kühlmittelpumpenmotors zu. Damit wird vorteilhaft die Rotationsbewegung des Kühlmittelpumpenmotors, der erfindungsgemäß als Schaltelement für das Ventil dient, zur Bereitstellung der Schaltbewegung ausnutzen. Somit kann auf ein Getriebe oder andere Umlenkmechanismen zur Kraftübertragung verzichtet werden, was wiederum eine vorteilhafte Reduzierung der Bauteile zur Folge hat.

In einer weiter bevorzugten Ausführungsform der erfindungsgemäßen Kombination aus elektrischer Kühlmittelpumpe und integriertem Ventil ist das Ventil, insbesondere Taktweise, durch Drehung des Drehschieberelements um einen Winkelabschnitt von jeweils 180° in Rücklaufdrehrichtung des Kühlmittelpumpenmotors umschaltbar. Hiermit wird vorteilhaft nicht nur die vom Pumpenmotor verfügbare Rotationsbewegung zur Schaltung des Ventils genutzt, sondern zugleich eine klare Trennung der Doppelfunktion a) Pumpenantrieb und b) Ventilbetätigung sichergestellt, in dem die Rücklaufdrehrichtung für das Schalten des Ventils und die Vorlaufdrehrichtung zur Förderung des Kühlmittels vorgesehen ist. Damit ist immer gewährleistet, daß ein Schalten des Ventils nur im lastfreien Zustand erfolgt. Dies bietet den zusätzlichen Vorteil, daß auf den Drehschieber als Ventilelement im Ventil keine zusätzlichen Druck- oder Strömungskräfte einwirken. Damit wird der Drehschieber wesentlich leichter schaltbar. Somit kann in vorteilhafter Weise das Ventil bereits durch überraschend kleine Schaltkräfte betätigt werden. Die aus der Praxis bekannten aufwendigen separaten Schaltantriebe für das Ventil können somit vollständig entfallen. Darüber hinaus sind keine zusätzlichen Hilfsmittel notwendig, um die beiden Schaltpositionen a) "Kühler offen" oder b) "Bypass offen" zu unterscheiden, da der Drehschieber immer jeweils um eine halbe Umdrehung taktweise weitergedreht wird und somit bei gleichbleibender Dreh- bzw. Bewegungsrichtung dennoch zyklisch abwechselnd zwischen diesen beiden Schaltpositionen hin- und her schaltet. Eine Verwechslung oder Fehlinterpretation der jeweiligen Schaltstellung ist damit ausgeschlossen. In vorteilhafter Weise kann hierbei eine zusätzliche Schaltsicherheit erreicht werden, wenn die zuletzt eingenommene Schaltstellung in einem Zwischenspeicher für das Datenmanagement abgelegt wird.

Gemäß einer weiter bevorzugten Ausführungsform weist das Drehschieberelement eine Strömungsleiteinrichtung auf. Mittels dieser kann in vorteilhafter Weise die Anströmung je nach Schaltstellung vom Bypass oder vom Kühler so optimiert auf das Zentrum der Kühlmittelpumpe bzw. deren Längsachse orientiert werden, daß eine optimale Umströmung des Pumpenlaufrades garantiert und damit ein größtmöglicher Durchsatz bei geringstmöglichen Druckverlusten sichergestellt ist.

In einer weiter bevorzugten Ausführungsform weist das 3/2-Wege-Ventil in dessen Gehäuseabschnitt einen weiteren, vorzugsweise permanent offenen, Zulauf vom Heizungsrücklauf auf. Der Heizungsrücklauf wird hierbei vorzugsweise in dem pumpenmotorabgewandten Gehäuseabschnitt im Zwickelbereich zwischen dem Zulauf des Bypass und dem Zulauf des Kühlers, vorzugsweise in einer Ebene, die durch die Pumpenlängsachse verläuft, angeordnet. Damit ist in vorteilhafter Weise sichergestellt, daß unabhängig vom Betriebszustand des Kraftfahrzeugverbrennungsmotors bereits vom Startvorgang weg dem Heizungskreislauf für die Klimatisierung der Fahrgastzelle im Fahrzeug Wärme zugeführt werden kann.

Entsprechend einer weiter bevorzugten Ausführungsform ist die Kühlmittelpumpensteuereinheit zugleich für die Steuerung des Ventils vorgesehen. Dies hilft wiederum Bauteile als auch Regelelektronik zu sparen. Zudem wird dadurch eine weitere Reduzierung des Bauraums ermöglicht. Gleichzeitig kann das Gewicht reduziert werden. Ferner sind damit Kosteneinsparungen realisierbar.

In einer weiter bevorzugten Ausführungsform bildet die Anströmrichtung des vom Kühler anströmenden Kühlmittels mit der Kühlmittelpumpenlängsachse einen Winkel von weniger als 40°, vorzugsweise weniger als 30°. In Analogie hierzu bildet die Anströmrichtung des vom Bypass anströmenden Kühlmittels der Kühlmittelpumpenlängsachse einen Winkel von weniger als 40°, vorzugsweise weniger als 30°. Auf diese Weise ist vorteilhaft sichergestellt, daß Strömverluste möglichst gering ausfallen. Auch aus strömungstechnischen Gründen sollte zur Vermeidung von Verwirbelungen der Winkel zwischen Bypassflansch oder Kühlerflansch relativ zur Pumpenlängsachse klein gehalten werden, was hiermit in vorteilhafter Weise erreicht wird.

Gemäß einer weiter bevorzugten Ausführungsform weist der Zulauf des Bypass Ventils ein zusätzliches, vorgespanntes, insbesondere federvorgespanntes Ventil auf. Auf diese Weise wird vorteilhaft sichergestellt, daß beispielsweise bei einem Startvorgang mit entsprechend kaltem Motor noch kein Kühlmittel durch den Motor umgewälzt wird. Dabei kann die Kühlmittelpumpe dennoch in dieser Phase bereits in Betrieb genommen werden, um beispielsweise zunächst Kühlmittel nur über den Heizungskreislauf zu fördern, damit die Fahrgastzelle möglichst rasch auf angenehme Temperaturen aufgeheizt werden kann. Wenn in der Zwischenzeit die Betriebstemperatur des Motors soweit gestiegen ist, daß ein erstes Kühlen des Motorblocks notwendig wird, kann die Drehzahl des Pumpenmotors soweit erhöht werden, daß die damit erreichte Fördermenge eine Druckdifferenz erzeugt, die das vorgespannte Ventil im Bypass-Zulauf öffnet, so daß Kühlmittel über den Bypass-Kreislauf dem Motorblock zugeführt werden kann. Wird im weiteren Betrieb der Brennkraftmaschine eine noch größere Kühlleistung angefordert, so kann das Ventil von der Schaltstellung "Bypass offen" auf die Schaltstellung "Kühler offen" umgeschaltet und eine entsprechend höhere Kühlleistung über den Kühler bereit gestellt werden. Damit ist sichergestellt, daß der Motorblock weder zu spät, noch zu früh, geschweige denn unnötig gekühlt bzw. dessen Wärme abgeführt wird. Damit ist gewährleistet, daß das Schmiermittel bzw. Öl des Motors immer auf einer optimalen Betriebstemperatur gehalten werden kann und keine unerwünschten Wärmestaus oder Wärmeverluste auftreten.

In verfahrenstechnischer Hinsicht wird die Aufgabe durch die Merkmale des Anspruchs 13 gelöst. Hierbei wird erstmals ein Verfahren zur Steuerung eines Ventils einer elektrischen Kühlmittelpumpe, insbesondere für den Kühlmittelkreislauf von Kraftfahrzeugverbrennungsmotoren, mit einem Kühlmittelpumpenmotor, der über eine Pumpenwelle ein Pumpenlaufrad antreibt, und mit einem im Pumpenzulauf integrierten Ventil vorgeschlagen, bei dem die erforderliche Schaltarbeit zum Kühlmittelpumpenmotor geleistet und über die Welle des Pumpenmotors auf das Ventil, insbesondere ein 3/2-Wege-Ventil, übertragen wird. Die hiermit erzielten Vorteile sind bereits vorstehend diskutiert worden.

In einer weiter bevorzugten Ausführungsform des erfindungsgemäßen Verfahrens weist das 3/2-Wege-Ventil ein Drehschieberelement mit zwei Stellungen, insbesondere Raststellungen, nämlich Schaltstellungen a) "Kühler offen" oder b) "Bypass offen" auf, und ist über einen Freilauf mit der Pumpenwelle verbunden, wobei eine Kraftübertragung auf das Drehschieberelement vermittels des Freilaufs bei Drehung des Kühlmittelpumpenmotors in Vorwärtslaufrichtung ausgeschlossen ist und eine Kraftübertragung nur in Rücklaufdrehrichtung des Kühlmittelpumpenmotors erfolgt. Die damit verbundenen Vorteile sind ebenfalls bereits vorstehend diskutiert worden.

Gemäß einer weiter bevorzugten Ausführungsform des Verfahrens wird das 3/2-Wege-Ventil durch, insbesondere taktweise, Drehung des Drehschieberelements, um einen Winkelabschnitt von jeweils 180° in Rücklaufdrehrichtung des Kühlmittelpumpenmotors umgeschaltet.

Zum Umschalten des 3/2-Wege-Ventils wird in weiter bevorzugter Ausführungsform des erfindungsgemäßen Verfahrens der in Vorwärtslaufrichtung laufende Kühlmittelpumpenmotor kurz angehalten, dann in Rücklaufdrehrichtung betrieben, wiederum kurz angehalten und abschließend wieder in Vorwärtslaufrichtung betrieben. Damit ist sichergestellt, daß eine klare Trennung zwischen Kühlmittelförderung und Umschaltung der Ventilstellung gegeben ist. Zudem wird das Ventil nur in lastfreiem Zustand umgeschaltet, so daß es bereits mit geringen Schaltkräften betätigt werden kann. Ferner sind auf diese Weise relativ einfach eindeutige Schaltstellungen erzielbar.

In einer weiter bevorzugten Ausführungsform des Verfahrens kann der Lauf des Rotors beispielsweise mittels eines Hallsensors überwacht werden. Dabei kann mittels der vorhandenen Elektronik des bürstenlosen Pumpenmotors die Rotorstellung, der Rotordrehwinkel sowie der Stromverlauf überwacht werden und dadurch festgestellt wird, wann das Drehschieberelement eine bestimmte Schaltstellung, insbesondere Raststellung, verlassen und die andere eingenommen hat. Hierbei wird in vorteilhafter Weise eine Rückmeldung der Stellung des Drehschieberelements über dessen mechanische Kopplung mittels des Freilaufs über die Antriebswelle auf den Rotor ausgenutzt. Denn je nach Schaltstellung und Drehposition des Drehschieberelements ist im Zuge der Umschaltung ein leichteres Drehen oder beim Ein- bzw. Ausrasten wiederum ein schwergängigeres Drehen des Drehschieberelements feststellbar. Das führt zu unterschiedlichen Spannungs/Stromverläufen in den Statorspulen, die gemessen und dementsprechend ausgewertet werden können. Damit kann in vorteilhafter Weise mit kleinstem Aufwand eine möglichst genaue Bestimmung der jeweiligen Stellung des Drebschieberelements erreicht werden.

In einer weiter bevorzugten Ausführungsform wird ein für eine bestimmte Kühlmittelumwälzung bzw. Kühlmitteldurchsatz geforderter Kühlmittelförderstrom über die Pumpendrehzahl der Kühlmittelpumpe eingestellt. Dies bietet den Vorteil einer besonders feinen Regulierung der Kühlung des Kraftfahrzeugrnotors verbunden mit einem verbesserten dynamischen Regelverhalten ohne Druckverluste im Kühlkreislauf.

Die vorstehend beschriebene Erfindung wird nachfolgend in Ausführungsbeispielen anhand der Figuren der Zeichnung näher erläutert. Es zeigt:
- Fig. 1: in einer teilweise geschnitten dargestellten Ansicht eine erfindungsgemäße Kombination aus Kühlmittelpumpe und Ventil;
- Fig. 2: eine Frontansicht der in Fig. 1 von der Seite dargestellten Kombination aus Pumpe und Ventil;
- Fig. 3: eine Innenansicht des Ventils entlang der in Fig. 1 angegebenen Schnittlinie B-B; und
- Fig. 4: eine dreidimensionale Ansicht der in Fig. 1 bis Fig. 3 gezeigten erfindungsgemäßen Kombination aus Pumpe und Ventil.

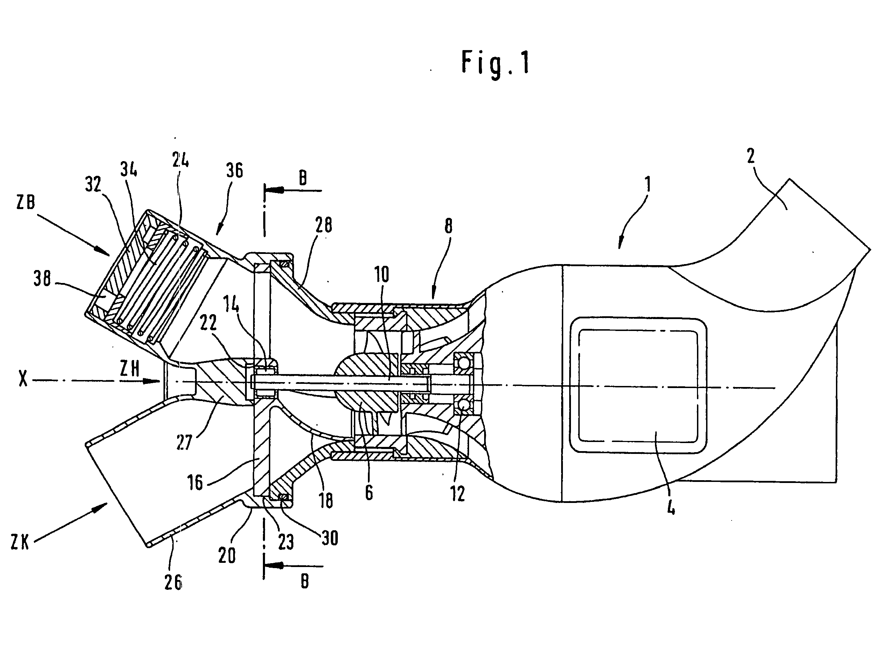

In Fig. 1 ist in einer teilweise aufgebrochenen Ansicht die erfindungsgemäße Kombination einer elektrischen Kühlmittelpumpe mit im gemeinsamen Gehäuse integriertem Ventil dargestellt. Die Kühlmittelpumpe 1 weist einen in dieser Darstellung rechts oben liegenden Abflußflansch 2 zum Anschluß der nicht näher dargestellten Leitung, die zum Kraftfahrzeugverbrennungsmotor führt, auf. Das nach außen ragende Gehäuse 4 der Steuerelektronik der Pumpe 1 ist mit seiner äußeren Kontur angedeutet.

Im in der linken Bildhälfte von Fig. 1 geschnitten dargestellten Gehäusebereich ist das Pumpenlaufrad 6 innerhalb des zentralen Gehäuseabschnittes 8 erkennbar. Das Pumpenlaufrad 6 sitzt auf einer Pumpenwelle 10, die konzentrisch zur Pumpenlängsachse X orientiert ist. Es wird vermittels eines nicht näher gezeigten Pumpenmotors angetrieben. Am rechten Rand des geschnitten dargestellten Bereichs ist eine Lagerung 12 zur Lagerung der Pumpenwelle 10 dargestellt. Die Pumpenwelle 10 greift mit deren vom Pumpenmotor abgewandten Ende in einen Freilauf 14 ein. Der Freilauf 14 seinerseits steht mit einem in dieser bevorzugten Ausführungsform als Drehschieberelement 16 ausgebildeten Ventilelement in Eingriff.

Das Drehschieberelement 16 verfügt über eine Strömungsleiteinrichtung 18, die hier in Fig. 1 im Schnitt bogenförmig dargestellt ist und zur optimalen Zuleitung der Kühlmittelflüssigkeit zum Pumpenlaufrad 6 hin dient.

Der Freilauf 14 mit der darin eingreifenden Pumpenwelle 10 ist seinerseits im Ventilgehäuseabschnitt 20 gelagert.

Der Freilauf 14 mit der darin eingreifenden Pumpenwelle 10 ist in einer beispielsweise als zentrale Bohrung 22 ausgebildeten Ausnehmung des Drehschieberelements 16 angeordnet. Die Lagerung des beispielsweise als Flachdrehschieber ausgebildeten Drehschieberelements 16 erfolgt über entsprechend ausgebildete Partien bzw. Randabschnitte 23 am Umfang des Drehschieberelements 16. Auf diese Weise wird eine weitgehend koaxiale zentrische Position des Freilaufs 14 in Bezug auf die Pumpenwelle 10 sichergestellt, so daß eine unzulässige Beaufschlagung der Freilaufelemente des Freilaufs 14 mit Radialkräften ausgeschlossen ist.

Ein erster Zulaufflansch 24, welcher zum Anschluß der vom nicht näher dargestellten Bypass kommenden Leitung dient und ein zweiter Zulaufflansch 26, welcher zum Anschluß für die nicht näher dargestellte Zuleitung vom Kühler dient, münden im Ventilgehäuse 20 und bilden dabei zwischen sich einen mittig angeordneten Zwickel 27 aus. Der Zulauf vom Bypass ist mit dem Pfeil ZB symbolisiert. Der Zulauf vom Kühler ist mit dem Pfeil ZK symbolisiert. Ferner ist parallel zur Längsachse X im Bereich des Zwickels 27 der Zulauf des Heizungsrücklaufs mit dem Pfeil ZH symbolisiert.

Der Ventilgehäuseabschnitt 20 ist gegenüber dem diesen aufnehmenden Pumpengehäuseabschnitt 28 mit einer Dichtung 30 abgedichtet. Der Pumpengehäuseabschnitt 28, welcher sich zum Pumpenzentrum hin verjüngt mündet in den zentralen Gehäuseabschnitt 8 der Kühlmittelpumpe 1.

Im Anschlußflansch 24 des Bypass-Zulaufs ZB ist ein weiteres Ventil 32 gezeigt, das vermittels einer Feder 34 vorgespannt ist und zum Verschließen des Bypass-Zulaufs bis zu einem bestimmten Differenzdruck dient. Sobald dieser Differenzdruck aufgrund einer bestimmten Kühlmitteldurchsatzleistung der Pumpe 1 überschritten ist, öffnet das Ventil 32 und läßt Kühlmittel über den Bypass-Kreislauf vom Bypass des Kraftfahrzeugverbrennungsmotors durch das Ventil 36 in das Pumpenzentrum der Pumpe 1 strömen, vorausgesetzt das Ventil steht in der Stellung "Bypass offen".

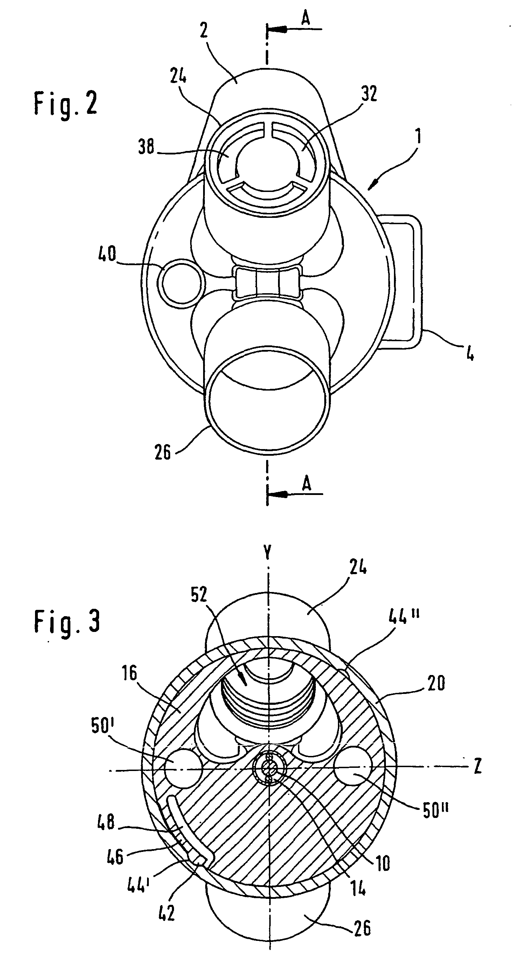

In Fig. 2 ist die in Fig. 1 dargestellte erfindungsgemäße Kombination aus Pumpe 1 und Ventil 36 in einer seitlichen Ansicht dargestellt, wobei in bezug auf Fig. 1 eine Blickrichtung in Längsachsenrichtung X von links gewählt ist. Im nach oben offen dargestellten Zulaufflansch 24 ist der spezielle Aufbau des zusätzlichen Ventils 32, welches mit einer in dieser Darstellung nicht näher gezeigten Feder vorgespannt ist, verdeutlicht. Das Ventil 32 weist ringsegmentartig angeordnete Strömungsdurchlässe 38 auf. Weiterhin ist der nach unten gerichtete durchgängig offene Zulaufflansch 26 für den Zulauf vom Kühler gezeigt. Links davon, auf Höhe der durch die Längsachse X verlaufenden Mittelebene, ist das dem Betrachter zugewandte Ende des Zulaufflansches 40 für den Heizungsrücklauf gezeigt. Rechts außen am Gehäuse der Pumpe 1 ist die Gehäuseabdeckung 4 der Steuerelektronik dargestellt. Diese Steuerelektronik wird gemeinsam für die Steuerung der Pumpe als auch des Ventils genutzt. Eine separate Steuerung des Ventils ist bei der erfindungsgemäßen Kombination aus Pumpe und Ventil nicht erforderlich. Nach hinten oben ist der Rand des Anschlußflansches 2 für den Abfluß zum Kraftfahrzeugmotor noch teilweise erkennbar.

In Fig. 3 ist eine Ansicht von innen entsprechend der in Fig. 1 mit den Pfeilen B-B angedeuteten Schnittlinie in Blickrichtung parallel zur Pumpenlängsachse von rechts schauend dargestellt. Man erkennt das geschnittene Gehäuse 20 des Ventils. Die Pumpenlängsachse X verläuft senkrecht zur Bildebene. Im Zentrum der Hochachse Y und der Querachse Z ist das pumpenmotorabgewandte Ende der Pumpenwelle 10 im Schnitt gezeigt. Es steht in Eingriff mit dem Freilauf 14.

In der Darstellung gemäß Fig. 3 ist in etwa links unten eine nasenartige Auswölbung 42 des Drehschieberelements 16 gezeigt, wobei diese nasenartige Auswölbung 42 in eine entsprechende Ausnehmung 44' bzw. 44" im Gehäuse 20 einrastet. Hierbei repräsentiert ein Einrasten der Nase 42 in die Ausnehmung 44' eine Ventil-Schaltstellung "Bypass offen" und ein Einrasten der Nase 42 in die um 180° gegenüberliegende Ausnehmung 44' eine Schaltstellung "Kühler offen". Damit die Nase 42 des Drehschieberelements 16 ähnlich eines gefederten Rastelements in die Ausnehmungen 44' bzw. 44" federvorgespannt einrasten kann, ist die Nase 42 von einem in der Kontur des Drehschieberelements 16 enthaltenen Arm 46 getragen, wobei zwischen dem Arm 46 und der restlichen Kontur des Drehschieberelements 16 ein Schlitz 48 verbleibt.

Weiterhin ist in Fig. 3 eine Öffnung 50 bzw. 50" gezeigt, die sicherstellt, daß in jeder Schaltstellung des Ventils 36 der Zulauf vom Heizungsrücklauf in der hier dargestellten Variante immer offen bleibt. Die Öffnung 52, die je nach Schaltstellung entweder den Zulauf vom Bypass oder den Zulauf vom Kühler freigibt, ist in der hier dargestellten Ausführungsvariante strömungstechnisch optimiert und erinnert hinsichtlich deren Kontur an eine Mischform aus Niere und gewölbtem Dreieck. Die äußeren Enden der Anschlußflansche für den Zulauf des Bypass 24 als auch für den Zulauf vom Kühler 26 sind mit angedeutet.

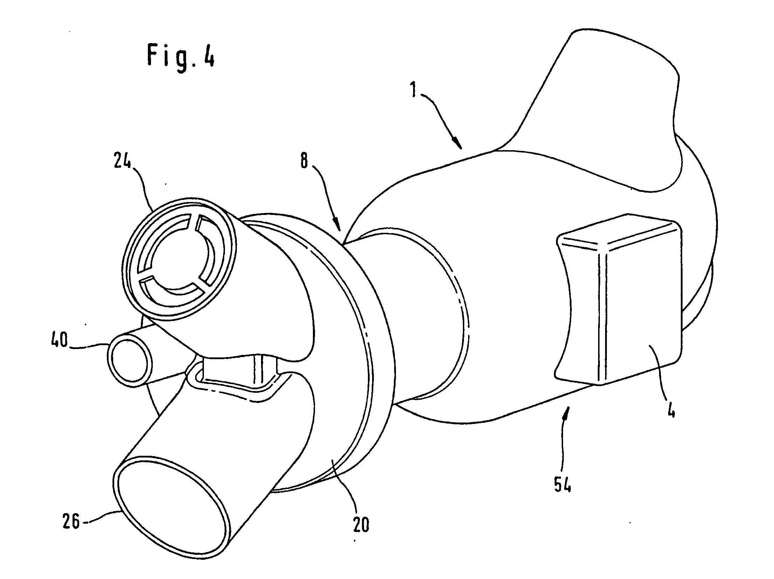

In Fig. 4 ist die in Figuren 1 bis 3 in verschiedenen Ansichten gezeigte beispielhafte Ausführungsform einer erfindungsgemäßen Kombination aus Pumpe 1 und Ventil 36 in einer dreidimensionalen Ansicht schräg von vorne gezeigt. Das Gehäuse der Pumpe 1 ist in dieser Darstellung komplett geschlossen. Hinter dem Gehäuseabschnitt 4 verbirgt sich die gemeinsame Steuerelektronik für die Pumpe und das Ventil. Im verdeckten hinteren Gehäuseabschnitt 54 der Pumpe 1 verbirgt sich der Pumpenmotor, wohingegen in der vorgelagerten Einschnürung im zentralen Abschnitt 8 das nicht näher dargestellte Pumpenlaufrad 10 verborgen ist. Davor befindet sich in dieser Darstellung gemäß Fig. 4 der Ventilgehäuseabschnitt 20. Dem Betrachter nach links zugewandt sind die Zulauflansche 24 für den Zulauf vom Bypass und 26 für den Zulauf vom Kühler als auch 40 für den Zulauf vom Heizungsrücklauf.

Die vorliegende Erfindung schafft damit erstmals in vorteilhafter Weise eine elektrische Kühlmittelpumpe, insbesondere für den Kühlmittelkreislauf von Kraftfahrzeugverbrennungsmotoren, mit einem Kühlmittelpumpenmotor, der über eine Pumpenwelle ein Pumpenlaufrad antreibt, und mit einem im Pumpenzulauf integrierten Ventil, wobei erstmalig der Kühlmittelpumpenmotor das Schaltelement für das Ventil ist. Ferner gibt die vorliegende Erfindung erstmals ein Verfahren zur Steuerung des Ventils an, bei dem die erforderliche Schaltarbeit vom Kühlmittelpumpenmotor geleistet und über die Welle des Pumpenmotors auf das Ventil, insbesondere ein 3/2-Wege-Ventil, übertragen wird.

Darüber hinaus ist bei einer beispielhaften Variante der erfindungsgemäßen Kombination aus in einem Gehäuse integrierter Kühlmittelpumpe mit Ventil das Ventil im Zulauf der elektrischen Axialpumpe angeordnet. Das Ventil ist als Flachdrehschieber ausgeführt. Zwei axiale Zuläufe bilden die Anschlüsse für Kühlerrücklauf und Motorbypass. Der Flachdrehschieber wird in den beiden Schaltstellungen a) "Kühler offen" und b) "Bypass offen" durch zwei Rastpositionen im Abstand von 180° positioniert. Der Schaltvorgang erfolgt durch die Pumpenmotorelektronik. Diese erkennt die Veränderungen im Stromverlauf, der zum Überwinden einer Rastposition ansteigt. Weiterhin wertet sie das Drehwinkelsignal aus, welches z.B. von einem Hallsensor des bürstenlosen Pumpenmotors geliefert wird. Die Positionserkennung kann z.B. auch durch einen Strombeachter erfolgen, da sich je nach Schaltstellung für eine bestimmte Referenzdrehzahl unterschiedliche Differenzdrücke für a) "Kühler offen" oder b) "Bypass offen" ergeben und damit unterschiedliche Stromwerte beobachten lassen. Der zuletzt erkannte Positionswert wird in einem Speicher abgelegt. Weiterhin ist der Flachdrehschieber im Umfang des Ventilgehäuseabschnitts drehbar gelagert. Die Pumpenmotorwelle ist nach vorne verlängert so daß ein Eingriff in einen Freilauf erzielt wird. Dabei ist der Freilauf seinerseit in einer Innenbohrung des Drehschiebers angeordnet und nimmt diesen in der Rücklaufrichtung des Pumpenmotors drehend mit. Im Pumpbetrieb ist der Freilauf geöffnet. Die Welle dreht weitestgehend frei von zusätzlicher Reibung. Zum Betätigen des Ventils wird der Motor kurzzeitig gestoppt und reversiert. Bedingt durch die thermische Zeitkonstante hat dies keine negative Auswirkung hinsichtlich eines unzulässigen Temperaturanstiegs des Pumpenmotors und/oder der Brennkraftmaschine. Hierbei wird die Eigenschaft des Gleichstrommotors ausgenutzt, kurzzeitig ein sehr großes Anlaufmoment ausüben zu können, welches um den Faktor 10 über dem Dauerdrehmoment liegt.

Bei der erfindungsgemäßen Kombination aus Pumpe mit integriertem Ventil inkl. integrierter Regelelektronik handelt es sich um ein mechatronisches System, welches die Zentraleinheit eines Thermomanagement-Systems für künftige Kühlsysteme darstellt. Der hochintegrierte Aufbau und die Belegung von Bauteilen mit Doppelfunktionen führt zu einem äußerst kompakten System mit deutlichen Vorteilen gegenüber bekannten Lösungen, was sich auch in geringeren Gesamtkosten äußert.

## Patentansprüche

1. Elektrische Kühlmittelpumpe (1), insbesondere für den Kühlmittelkreislauf von Kraftfahrzeugverbrennungsmotoren, mit einem Kühlmittelpumpenmotor, der über eine Pumpenwelle (10) ein Pumpenlaufrad (6) antreibt, und mit einem im Pumpenzulauf integrierten Ventil (36),
**dadurch gekennzeichnet, daß**
der Kühlmittelpumpenmotor das Schaltelement für das Ventil (36) ist,
wobei ein als Drehschieberelement (16) ausgebildetes Ventilelement über einen Freilauf (14) mit der Pumpenwelle (10) verbunden ist, und wobei der Freilauf (14) nur eine Kraftübertragung auf das Drehschieberelement (16) in Rücklaufdrehrichtung des Kühlmittelpumpenmotors zuläßt.

2. Elektrische Kühlmittelpumpe (1) nach Anspruch 1, **dadurch gekennzeichnet, daß** das Ventil (36) ein 3/2-Wege-Ventil ist.

3. Elektrische Kühlmittelpumpe (1) nach Anspruch 1 oder 2, **dadurch gekennzeichnet, daß** das Ventil (36) als Ventilelement eine flache Scheibe aufweist.

4. Elektrische Kühlmittelpumpe (1) nach einem der Ansprüche 1 bis 3, **dadurch gekennzeichnet, daß** das Drehschieberelement (16) zwei Stellungen, insbesondere Raststellungen, aufweist, nämlich die Schaltstellungen a) "Kühler offen" oder b) "Bypass offen".

5. Elektrische Kühlmittelpumpe (1) nach einem der Ansprüche 1 bis 4, **dadurch gekennzeichnet, daß** der Freilauf (14) bei Drehung des Kühlmittelpumpenmotors in Vorwärtslaufrichtung eine Kraftübertragung auf das Drehschieberelement (16) ausschließt.

6. Elektrische Kühlmittelpumpe (1) nach einem der Ansprüche 1 bis 5, **dadurch gekennzeichnet, daß** das Ventil (36) durch, insbesondere taktweise, Drehung des Drehschieberelements (16) um einen Winkelabschnitt von jeweils 180° in Rücklaufdrehrichtung des Kühlmittelpumpenmotors umschaltbar ist.

7. Elektrische Kühlmittelpumpe (1) nach einem der Ansprüche 1 bis 6, **dadurch gekennzeichnet, daß** das Drehschieberelement (16) eine Strömungsleiteinrichtung (18) aufweist.

8. Elektrische Kühlmittelpumpe (1) nach einem der Ansprüche 1 bis 7, **dadurch gekennzeichnet, daß** das 3/2-Wege-Ventil in dessen Gehäuseabschnitt (20) einen weiteren, insbesondere permanent offenen, Zulauf (ZH; 40) vom Heizungsrücklauf aufweist.

9. Elektrische Kühlmittelpumpe (1) nach einem der Ansprüche 1 bis 8, **dadurch gekennzeichnet, daß** die Kühlmittelpumpensteuereinheit zugleich für die Steuerung des 3/2-Wege-Ventils vorgesehen ist.

10. Elektrische Kühlmittelpumpe (1) nach einem der Ansprüche 1 bis 9, **dadurch gekennzeichnet, daß** die Anströmrichtung des vom Kühler anströmenden Kühlmittels (ZK) mit der Kühlmittelpumpenlängsache (X) einen Winkel von weniger als 40°, vorzugsweise weniger als 30° bildet.

11. Elektrische Kühlmittelpumpe (1) nach einem der Ansprüche 1 bis 10, **dadurch gekennzeichnet, daß** die Anströmrichtung des vom Bypass anströmenden Kühlmittels (ZB) mit der Kühlmittelpumpenlängsache (X) einen Winkel von weniger als 40°, vorzugsweise weniger als 30° bildet.

12. Elektrische Kühlmittelpumpe (1) nach einem der Ansprüche 1 bis 11, **dadurch gekennzeichnet, daß** der Zulauf des Bypass (24) des 3/2-Wege-Ventils ein zusätzliches, vorgespanntes, insbesondere federvorgespanntes, Ventil (32) aufweist.

13. Verfahren zur Steuerung eines Ventils (36) einer elektrischen Kühlmittelpumpe (1), insbesondere für den Kühlmittelkreislauf von Kraftfahrzeugverbrennungsmotoren, mit einem Kühlmittelpumpenmotor, der über eine Pumpenwelle (10) ein Pumpenlaufrad (6) antreibt, und mit einem im Pumpenzulauf integrierten Ventil (36),
**dadurch gekennzeichnet, daß**
die erforderliche Schaltarbeit vom Kühlmittelpumpenmotor geleistet und über die Welle (10) des Pumpenmotors auf das Ventil (36), insbesondere 3/2-Wege-Ventil, übertragen wird,
wobei ein als Drehschieberelement (16) ausgebildetes Ventilelement über einen Freilauf (14) mit der Pumpenwelle (10) verbunden ist, und wobei der Freilauf (14) nur eine Kraftübertragung auf das Drehschieberelement (16) in Rücklaufdrehrichtung des Kühlmittelpumpenmotors zuläßt.

14. Verfahren nach Anspruch 13, **dadurch gekennzeichnet, daß** das 3/2-Wege-Ventil das Drehschieberelement (16) mit zwei Stellungen, insbesondere Raststellungen, nämlich die Schaltstellungen a) "Kühler offen" oder b) "Bypass offen", aufweist, wobei eine Kraftübertragung auf das Drehschieberelement (16) vermittels des Freilaufs (14) bei Drehung des Kühlmittelpumpenmotors in Vorwärtslaufrichtung ausgeschlossen ist.

15. Verfahren nach Anspruch 13 oder 14, **dadurch gekennzeichnet, daß** das 3/2-WegeVentil (36) durch, insbesondere taktweise, Drehung des Drehschieberelements (16) um einen Winkelabschnitt von jeweils 180° in Rücklaufdrehrichtung des Kühlmittelpumpenmotors umgeschaltet wird.

16. Verfahren nach einem der Ansprüche 13 bis 15, **dadurch gekennzeichnet, daß** zum Umschalten des 3/2-Wege-Ventils (36) der in Vorwärtslaufrichtung laufende Kühlmittelpumpenmotor kurz angehalten, dann in Rücklaufdrehrichtung betrieben, wiederum kurz angehalten und abschließend wieder in Vorwärtslaufrichtung betrieben wird.

17. Verfahren nach einem der Ansprüche 13 bis 16, **dadurch gekennzeichnet, daß** mittels der vorhandenen Elektronik des bürstenlosen Pumpenmotors die Rotorstellung, der Rotordrehwinkel sowie der Stromverlauf überwacht werden und **dadurch** festgestellt wird, wann das Drehschieberelement (16) eine bestimmte Schaltstellung, insbesondere Raststellung, verlassen und die andere eingenommen hat.

18. Verfahren nach einem der Ansprüche 13 bis 17, **dadurch gekennzeichnet, daß** ein für eine bestimmte Kühlmittelumwälzung geforderter Kühlmittelförderstrom über die Pumpendrehzahl der Kühlmittelpumpe (1) eingestellt wird.

## Claims

1. An electrical coolant pump (1), in particular for the coolant circuit of internal combustion engines for automotive vehicles, comprising a coolant pump motor for driving an impeller (6) through the intermediary of a pump shaft (10), and a valve (36) that is integrated into the pump inlet,
**characterized in that**
said coolant pump motor constitutes the switching element for said valve (36),
wherein a valve member which is provided as a rotary valve element (16) is connected with the pump shaft (10) via a free-wheel (14), and wherein said free-wheel (14) permits transmission of energy to the rotary valve element (16) in the reverse rotational direction of the coolant pump motor only.

2. The electrical coolant pump (1) in accordance with claim 1, **characterized in that** said valve (36) is a 3/2-port directional control valve.

3. The electrical coolant pump (1) in accordance with claim 1 or 2, **characterized in that** said valve (36) includes a flat disc as a valve member.

4. The electrical coolant pump (1) in accordance with any one of claims 1 to 3, **characterized in that** said rotary valve element (16) has two positions, in particular lock-in positions, namely, the switching positions a) "radiator open" or b) "bypass open."

5. The electrical coolant pump (1) in accordance with any one of claims 1 to 4, **characterized in that**, during a rotation of said coolant pump motor in the forward running direction, said free-wheel (14) excludes transmission of energy to said rotary valve element (16).

6. The electrical coolant pump (1) in accordance with any one of claims 1 to 5, **characterized in that** said valve (36) may be switched by rotation, in particular cyclical rotation, of said rotary valve element (16) through a respective angular section of 180 degrees in the reverse rotational direction of said coolant pump motor.

7. The electrical coolant pump (1) in accordance with any one of claims 1 to 6, **characterized in that** said rotary valve element (16) includes flow guide means (18).

8. The electrical coolant pump (1) in accordance with any one of claims 1 to 7, **characterized in that** said 3/2-port directional control valve comprises in its housing portion (20) another inlet (ZH; 40) from the heating return, which inlet in particular is permanently open.

9. The electrical coolant pump (1) in accordance with any one of claims 1 to 8, **characterized in that** said coolant pump control unit is at the same time provided for controlling said 3/2-port directional control valve.

10. The electrical coolant pump (1) in accordance with any one of claims 1 to 9, **characterized in that** the direction of flow of coolant (ZK) arriving from said radiator encloses with said coolant pump longitudinal axis (X) an angle of less than 40°, preferably less than 30°.

11. The electrical coolant pump (1) in accordance with any one of claims 1 to 10, **characterized in that** the direction of flow of coolant (ZB) arriving from said bypass encloses with said coolant pump longitudinal axis (X) an angle of less than 40°, preferably less than 30°.

12. The electrical coolant pump (1) in accordance with any one of claims 1 to 11, **characterized in that** the inlet of said bypass (24) of said 3/2-port directional control valve includes an additional valve (32) which is biased, preferably spring-biased.

13. A method for controlling a valve (36) of an electrical coolant pump (1), in particular for the coolant circuit of internal combustion engines for automotive vehicles, comprising a coolant pump motor for driving an impeller (6) through the intermediary of a pump shaft (10), and a valve (36) that is integrated into the pump inlet,
**characterized in that**
the work necessary for switching is afforded by said coolant pump motor and is transmitted to said valve (36), in particular a 3/2-port directional control valve, via said shaft (10) of said pump motor,
wherein a valve member which is provided as a rotary valve element (16) is connected with the pump shaft (10) via a free-wheel (14), and wherein said free-wheel (14) permits transmission of energy to the rotary valve element (16) in the reverse rotational direction of the coolant pump motor only.

14. The method in accordance with claim 13, **characterized in that** said 3/2-port directional control valve comprises said rotary valve element (16) having two positions, in particular lock-in positions, namely, the switching positions a) "radiator open" or b) "bypass open", wherein transmission of energy to said rotary valve element (16) through the intermediary of said free-wheel (14) is excluded during a rotation of said coolant pump motor in a forward running direction.

15. The method in accordance with claim 13 or 14, **characterized in that** said 3/2-port directional control valve (36) is switched over by rotation, in particular cyclical rotation, of said rotary valve element (16) through a respective angular section of 180° in the reverse rotation direction of said coolant pump motor.

16. The method in accordance with any one of claims 13 to 15, **characterized in that** for switching over said 3/2-port directional control valve (36), said coolant pump motor running in a forward running direction is briefly stopped to then be driven in a reverse rotation direction, again stopped briefly, and finally again operated in the forward running direction.

17. The method in accordance with any one of claims 13 to 16, **characterized in that** rotor position, rotor angular position, and current development are monitored with the aid of the existing electronic unit of said brushless pump motor, whereby it is determined when said rotary valve element (16) has left a particular switching position, in particular lock-in position, and assumed the other switching position.

18. The method in accordance with any one of claims 13 to 17, **characterized in that** a coolant volume flow demanded for a particular coolant circulation is adjusted with the aid of the pump speed of said coolant pump (1).

## Revendications

1. Pompe électrique de fluide réfrigérant (1), en particulier pour le circuit de fluide réfrigérant de moteurs à combustion interne de véhicules automobiles, avec un moteur de la pompe de fluide réfrigérant, qui entraîne une roue mobile de pompe (6) par l'intermédiaire d'un arbre de pompe (10), et avec une soupape (36) intégrée dans le conduit d'arrivée de la pompe, **caractérisée en ce que** le moteur de la pompe de fluide réfrigérant constitue l'élément de commutation pour la soupape (36), un élément de soupape réalisé sous la forme d'un élément de vanne rotative (16) étant relié à l'arbre de pompe (10) par l'intermédiaire d'une roue libre (14), et la roue libre (14) ne permettant une transmission de force à l'élément de vanne rotative (16) que dans le sens de rotation inverse du moteur de la pompe de fluide réfrigérant.

2. Pompe électrique de fluide réfrigérant (1) selon la revendication 1, **caractérisée en ce que** la soupape (36) est une soupape à 3/2 voies.

3. Pompe électrique de fluide réfrigérant (1) selon la revendication 1 ou 2, **caractérisée en ce que** la soupape (36) comprend comme élément de soupape un disque plat.

4. Pompe électrique de fluide réfrigérant (1) selon l'une quelconque des revendications 1 à 3, **caractérisée en ce que** l'élément de vanne rotative (16) présente deux positions, en particulier des positions verrouillées, à savoir les positions de commutation a) "refroidisseur ouvert" ou b) "dérivation ouverte".

5. Pompe électrique de fluide réfrigérant (1) selon l'une quelconque des revendications 1 à 4, **caractérisée en ce que** la roue libre (14) exclut une transmission de force à l'élément de vanne rotative (16) lors de la rotation du moteur de la pompe de fluide réfrigérant dans le sens de rotation direct.

6. Pompe électrique de fluide réfrigérant (1) selon l'une quelconque des revendications 1 à 5, **caractérisée en ce que** la soupape (36) peut être inversée par une rotation, en particulier cadencée, de l'élément de vanne rotative (16) chaque fois d'une plage angulaire de 180°, dans le sens de rotation inverse du moteur de la pompe de fluide réfrigérant.

7. Pompe électrique de fluide réfrigérant (1) selon l'une quelconque des revendications 1 à 6, **caractérisée en ce que** l'élément de vanne rotative (16) présente un dispositif de guidage d'écoulement (18).

8. Pompe électrique de fluide réfrigérant (1) selon l'une quelconque des revendications 1 à 7, **caractérisée en ce que** la soupape à 3/2 voies présente, dans sa partie de corps (20), une autre arrivée, en particulier ouverte en permanence (ZH; 40), provenant du retour du chauffage.

9. Pompe électrique de fluide réfrigérant (1) selon l'une quelconque des revendications 1 à 8, **caractérisée en ce que** l'unité de commande de la pompe de fluide réfrigérant est également prévue pour la commande de la soupape à 3/2 voies.

10. Pompe électrique de fluide réfrigérant (1) selon l'une quelconque des revendications 1 à 9, **caractérisée en ce que** le sens d'arrivée du fluide réfrigérant (ZK) arrivant du refroidisseur forme un angle de moins de 40°, de préférence de moins de 30°, avec l'axe longitudinal (X) de la pompe de fluide réfrigérant.

11. Pompe électrique de fluide réfrigérant (1) selon l'une quelconque des revendications 1 à 10, **caractérisée en ce que** le sens d'arrivée du fluide réfrigérant (ZB) arrivant de la dérivation forme un angle de moins de 40°, de préférence de moins de 30°, avec l'axe longitudinal (X) de la pompe de fluide réfrigérant.

12. Pompe électrique de fluide réfrigérant (1) selon l'une quelconque des revendications 1 à 11, **caractérisée en ce que** le conduit d'arrivée de la dérivation (24) de la soupape à 3/2 voies présente une soupape supplémentaire précontrainte (32), en particulier précontrainte par un ressort.

13. Procédé pour la commande d'une soupape (36) d'une pompe électrique de fluide réfrigérant (1), en particulier pour le circuit de fluide réfrigérant de moteurs à combustion interne de véhicules automobiles, avec un moteur de la pompe de fluide réfrigérant, qui entraîne une roue mobile de pompe (6) par l'intermédiaire d'un arbre de pompe (10), et avec une soupape (36) intégrée dans le conduit d'arrivée de la pompe, **caractérisé en ce que** le travail de commutation nécessaire est fourni par le moteur de la pompe de fluide réfrigérant et est transmis par l'intermédiaire de l'arbre (10) du moteur de la pompe à la soupape (36), en particulier une soupape à 3/2 voies, un élément de soupape réalisé sous la forme d'un élément de vanne rotative (16) étant relié à l'arbre de pompe (10) par l'intermédiaire d'une roue libre (14), et la roue libre (14) ne permettant une transmission de force à l'élément de vanne rotative (16) que dans le sens de rotation inverse du moteur de la pompe de fluide réfrigérant.

14. Procédé selon la revendication 13, **caractérisé en ce que** la soupape à 3/2 voies comprend l'élément de vanne rotative (16) avec deux positions, en particulier des positions verrouillées, à savoir les positions de commutation a) "refroidisseur ouvert" ou b) "dérivation ouverte", dans lequel une transmission de force à l'élément de vanne rotative (16) par l'intermédiaire de la roue libre (14) lors de la rotation du moteur de la pompe de fluide réfrigérant dans le sens direct est exclue.

15. Procédé selon la revendication 13 ou 14, **caractérisé en ce que** la soupape à 3/2 voies (36) est inversée par une rotation, en particulier cadencée, de l'élément de vanne rotative (16) chaque fois d'une plage angulaire de 180°, dans le sens de rotation inverse du moteur de la pompe de fluide réfrigérant.

16. Procédé selon l'une quelconque des revendications 13 à 15, **caractérisé en ce que**, pour l'inversion de la soupape à 3/2 voies, le moteur de la pompe de fluide réfrigérant tournant dans le sens direct est arrêté brièvement, ensuite entraîné dans le sens de rotation inverse, à nouveau arrêté brièvement et ensuite à nouveau entraîné dans le sens de rotation direct.

17. Procédé selon l'une quelconque des revendications 13 à 16, **caractérisé en ce que** la position du rotor, l'angle de rotation du rotor ainsi que la courbe de courant sont surveillés au moyen de l'électronique existante du moteur sans collecteur de la pompe, et on observe ainsi quand l'élément de vanne rotative (16) a quitté une position de commutation déterminée, en particulier une position verrouillée, et a occupé l'autre.

18. Procédé selon l'une quelconque des revendications 13 à 17, **caractérisé en ce qu'**un courant d'alimentation de fluide réfrigérant requis pour une recirculation déterminée de fluide réfrigérant est réglé par l'intermédiaire de la vitesse de rotation de la pompe de fluide réfrigérant (1).
